Europäisches Patentamt

**European Patent Office**

**Office européen des brevets**

(11) Publication number: **0 079 693**

**A2**

(12) # EUROPEAN PATENT APPLICATION

(21) Application number: **82305626.2**

(22) Date of filing: **22.10.82**

(51) Int. Cl.³: **F 02 M 31/08**

(30) Priority: **18.11.81 ZA 818011**

(43) Date of publication of application:
**25.05.83 Bulletin 83/21**

(84) Designated Contracting States:
**AT BE CH DE FR GB IT LI LU NL SE**

(71) Applicant: **Cronjé, David Eduard Beyers**
**1, Minnaar Street**
**Potchefstroom Transvaal Province(ZA)**

(72) Inventor: **Cronjé, David Eduard Beyers**
**1, Minnaar Street**
**Potchefstroom Transvaal Province(ZA)**

(74) Representative: **Dixon, Donald Cossar et al,**
**Gee & Co. Chancery House Chancery Lane**
**London WC2A 1QU(GB)**

(54) **Method of and apparatus for heating a fuel-air mixture for an internal-combustion engine.**

(57) The invention provides a method of and an apparatus (11) for heating a substantially stoichiometric fuel/air mixture before it is aspirated into an internal combustion engine (10). Hot exhaust gas is conducted via an exhaust gas duct (30) into an enclosure (26) and from there to an outlet exhaust pipe (34). The enclosure (26) encloses an inlet manifold (22) of the engine (10). The hot exhaust gas flows over and around the inlet manifold (22), thus heating the fuel/air mixture within the inlet manifold to improve the mixing of the mixture.

FIG I

EP 0 079 693 A2

- 1 -

## A METHOD OF OPERATING, AND APPARATUS FOR USE IN THE OPERATION OF AN INTERNAL COMBUSTION ENGINE

THIS INVENTION relates to a method of operating, and apparatus for use in the operation of, an internal combustion engine.

The Applicant believes that the efficiency, and thus also the fuel economy, of an internal combustion engine can be improved by enhancing the mixing of the combustible air/fuel mixture aspirated by the engine.

It is an object of this invention to provide a method of, and apparatus for, improving the mixing of the combustible mixture aspirated by the engine.

In accordance with the invention, there is provided a method of operating an internal combustion engine, characterised by heating a substantially stoichiometric air/fuel mixture by means of waste heat from hot exhaust gas of the engine, before the mixture is aspirated into a cylinder of the engine.

The invention extends to apparatus for use in the operation of an internal combustion engine, having an inlet manifold for the engine; characterised in that the apparatus comprises ducting arranged in use to conduct exhaust gas in heat exchange relationship with the inlet manifold. In use, hot exhaust gas will be conducted via the heat exchange ducting to the outlet exhaust pipe. While flowing through the heat exchange ducting, heat will be transferred from the exhaust gas to fuel/air mixture conducted in the inlet manifold.

The heat exchange ducting may be in the form of an enclosure enclosing the inlet manifold.

In one embodiment of apparatus in accordance with the invention, the heat exchange ducting may be provided by an exhaust manifold for the engine. The inlet manifold and the exhaust manifold may be in the form of one or more castings, the exhaust manifold enclosing the inlet manifold.

The invention extends to an internal combustion engine including apparatus in accordance with the invention as described above.

The engine may have an air inlet arranged, in use, to let in air which has not been heated by waste heat of the engine. Due to the heating of the air/fuel mixture in an engine in accordance with the invention, the engine will aspirate a lower mass of mixture during inlet strokes of the pistons than other similar engines not operating in accordance with the invention. This may result in power loss of the engine. The Applicant believes that this power loss can be compensated for by letting in air to the air inlet at ambient air temperature, and not air at an increased temperature, such as air which has flowed through an engine radiator or over the engine before entering the air inlet.

The invention is now described by way of example with reference to the accompanying diagrammatic drawings. In the drawings,

Figure 1 shows, in diagrammatic three-dimensional view from in front, an internal combustion engine in accordance with the invention;

Figure 2 shows, in sectional plan view, another embodiment of apparatus in accordance with the invention; and

Figure 3 shows, schematically in three-dimensional side view, an internal combustion engine having the apparatus of Figure 2.

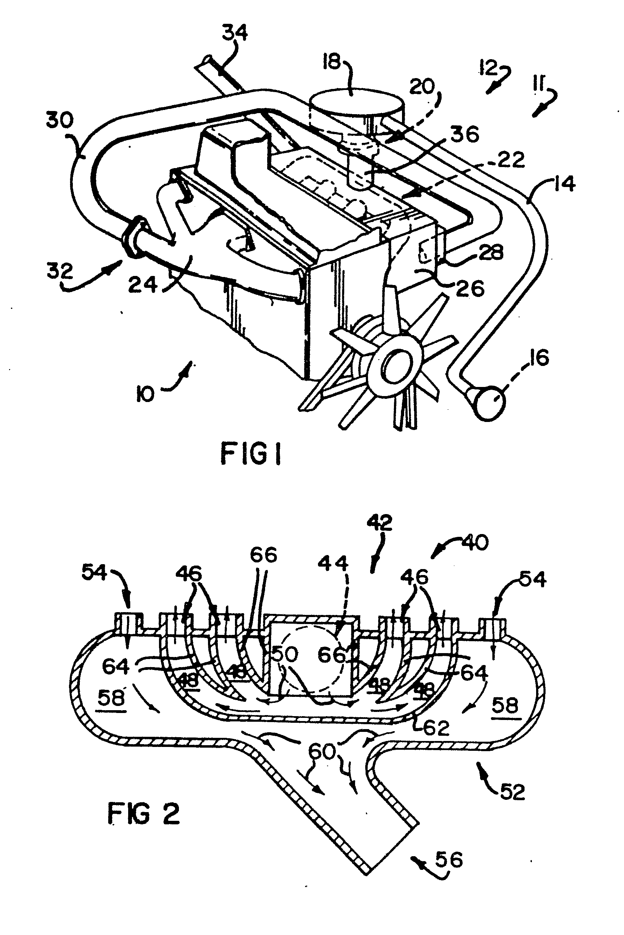

With reference to Figure 1 of the drawings, an internal combustion engine in accordance with the invention is generally indicated by reference numeral 10.

The engine 10 has mounted on it an apparatus 11 in accordance with the invention.  The apparatus 11 comprises an inlet system 12 including an air inlet 14 having an air inlet opening 16, an air cleaner 18, a carburettor 20 and an inlet manifold 22.  The apparatus 11 further comprises heat exchange ducting in the form of an enclosure 26 which is described in more detail below.

The engine 10 has mounted on it an exhaust manifold 24 which is connected to the enclosure 26 by an exhaust gas duct 30.  A coupling 32 interconnects the exhaust gas duct 30 and the exhaust manifold 24.  The exhaust gas duct 30 is connected to the enclosure 26 by means of an inlet connection 28 of the enclosure.  The enclosure 26 further has an outlet connection (not shown) which connects an outlet exhaust pipe 34 for the engine to the enclosure 26.

The enclosure 26 encloses the inlet manifold 22. Seals (not shown) are provided where a connecting duct 36, eading from the carburettor 20 to the inlet manifold 22, passes through a wall of the enclosure 26, and also where the branches of the inlet manifold 22 pass through a side wall of the enclosure 26 to be connected to inlet ports (not shown) of the engine 10.  Instead, the block of the engine 10 may provide a side wall for the enclosure 26, the bottom and top walls and the end walls of the enclosure 26 being sealingly attached to the engine block.

The air inlet opening 16 is provided ahead of a radiator (not shown) for the engine 10 so that, in use, air which has not been heated by waste heat of the engine is let into the inlet system 12.

In use, hot exhaust gas is conducted via the exhaust manifold 24, the exhaust duct 30 and the enclosure 26 to the outlet exhaust pipe 34 from where it is exhausted into the atmosphere. The inlet connection 28 and the outlet connection are positioned remote from each other to induce exhaust gas to flow through the length of the enclosure 26 and thus over and around the inlet manifold 22.

Ambient air is conducted via the air inlet 14 and the air cleaner 18 to the carburettor 20 where a stoichiometric amount of fuel is introduced into the air stream. The stoichiometric fuel/air mixture is conducted from the carburettor 20 via the connecting duct 36 and the inlet manifold 22 to the cylinders of the engine 10.

Due to the temperature gradient between the hot exhaust gas and the relatively cool fuel/air mixture, heat is transferred from the exhaust gas flowing over and around the inlet manifold to the fuel/air mixture within the inlet manifold.

The Applicant believes that by heating the fuel/air mixture before it is aspirated into the engine cylinders, the mixing of the fuel and air is improved. The Applicant further believes that such improvement of the mixing will enhance the efficiency and thus also the fuel economy of an engine.

With reference to Figure 2 another embodiment of apparatus in accordance with the invention is generally indicated by reference numeral 40. The apparatus 40 comprises an inlet manifold 42 and an exhaust manifold 52. The apparatus 40 is in the form of a casting. For ease of manufacture it may be in the form of a composite casting comprising a plurality of castings.

The inlet manifold 42 has an inlet connection 44 which is operatively connectable to a fuel/air mixing device such as a carburettor. The inlet manifold 42 further has four outlet connections 46 for operative connection to four inlet ports of a four-cylinder internal combustion engine. Passages 48 formed within the casting (by means of partitions 62,64 and 66), interconnect the inlet connection 44 with the outlet connections 46. The flow path which a fuel/air mixture will follow in use, is indicated by arrows 50.

The exhaust manifold 52 comprises a plurality of inlet connections 54 (of which two are shown in the drawing) corresponding to the number of exhaust ports of the engine. The exhaust manifold 52 also comprises an outlet connection 56.

A space 58 is defined within the casting between an outer wall thereof and the partition 62. The space 58 encloses the passages 48 of the inlet manifold 42, and interconnects the inlet connections 54 and the outlet connection 56. Arrows 60 indicates how exhaust gas will flow through the exhaust manifold 52 in use.

In operation, when relatively cool fuel/air mixture and relatively hot exhaust gas are conducted as indicated by arrows 50 and 60 respectively, heat will be transferred from the hot exhaust gas to the cool fuel/air mixture via the partition 62.

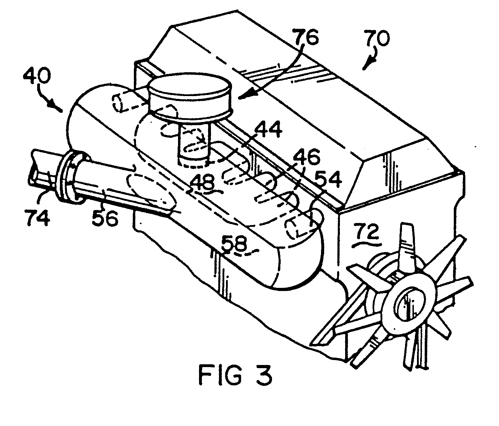

With reference to Figure 3, another embodiment of an internal combustion engine 70 is shown schematically. The engine 70 has mounted on its engine block 72 the apparatus 40 of Figure 2.

An air cleaner and carburettor assembly 76 is mounted on and is in communication with the inlet connection 44. The outlet connections 46 are connected to inlet ports of the engine 70. The inlet connections 54 are connected to exhaust ports of the engine 70. The outlet connection 56 is connected to an exhaust pipe 74.

CLAIMS:

1.        A method of operating an internal combustion engine, characterised by heating a substantially stoichiometric and/fuel mixture by means of waste heat from hot exhaust gas of the engine, before the mixture is aspirated into a cylinder of the engine.

2.        Apparatus for use in the operation of an internal combustion engine, having an inlet manifold (22,42) for the engine; characterised in that the apparatus comprises ducting (26,52) arranged in use to conduct exhaust gas in heat exchange realtionship with the inlet manifold (22,42).

3.        Apparatus as claimed in Claim 2, characterised in that the ducting is in the form of an enclosure (26) enclosing the inlet manifold (22).

4.        Apparatus as claimed in Claim 2, characterised in that the ducting is provided by an exhaust manifold (52) for the engine.

5.        Apparatus as claimed in Claim 4, in which the inlet manifold (42) and the exhaust manifold (52) are in the form of one or more castings, characterised in that the exhaust manifold encloses the inlet manifold.

6.      An internal combustion engine including apparatus as claimed in Claim 2.

7.      An internal combustion engine including apparatus as claimed in Claim 3.

8.      An internal combustion engine including apparatus as claimed in Claim 4.

9.      An internal combustion engine as claimed in Claim 6, which has an air inlet (16) characterised in that the air inlet is arranged, in use, to let in air which has not been heated by waste heat of the engine.

10.      An internal combustion engine as claimed in Claim 8, which has an air inlet characterised in that the air inlet is arranged, in use, to let in air which has not been heated by waste heat of the engine.

0079693

FIG 1

FIG 2

0079693

FIG 3